Europäisches Patentamt

European Patent Office

Office européen des brevets

(19)

(11) Veröffentlichungsnummer: **0 130 284 B1**

(12) **EUROPÄISCHE PATENTSCHRIFT**

(45) Veröffentlichungstag der Patentschrift: **21.08.91**

(51) Int. Cl.5: **C01B 31/18, C01B 3/50**

(21) Anmeldenummer: **84103657.7**

(22) Anmeldetag: **03.04.84**

(54) Verfahren zur Gewinnung von reinem Kohlenmonoxid.

(30) Priorität: **12.04.83 DE 3313171**

(43) Veröffentlichungstag der Anmeldung:
**09.01.85 Patentblatt 85/02**

(45) Bekanntmachung des Hinweises auf die
Patenterteilung:
**21.08.91 Patentblatt 91/34**

(84) Benannte Vertragsstaaten:
**BE DE FR GB IT NL**

(56) Entgegenhaltungen:
**EP-A- 0 017 297**
**DE-A- 2 711 991**
**DE-A- 2 814 660**
**DE-B- 2 025 763**

(73) Patentinhaber: **Linde Aktiengesellschaft**
**Abraham-Lincoln-Strasse 21**
**W-6200 Wiesbaden(DE)**

(72) Erfinder: **Fabian, Rainer, Dipl.-Ing.**
**Alpspitzweg 5**
**W-8192 Geretsried 1(DE)**
Erfinder: **Marold, Freimut, Dipl.-Ing.**
**Hauptstrasse 99**
**W-8014 Neubiberg(DE)**
Erfinder: **Latzin, Dieter, Dr. Ing.**
**Bräutigamstrasse 1**
**W-8000 München 71(DE)**

(74) Vertreter: **Schaefer, Gerhard, Dr.**
**Linde Aktiengesellschaft Zentrale Patentab-**
**teilung**
**W-8023 Höllriegelskreuth(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft ein Verfahren zur Gewinnung von Rein-CO aus einem durch endotherme katalytische Oxidation von Kohlenwasserstoffen in Gegenwart von $CO_2$ als Sauerstoff liefernder Komponente erzeugten, überwiegend aus Wasserstoff und Kohlenmonoxid bestehenden Gasgemisch.

Aus der DE-AS 27 11 991 ist ein Verfahren bekannt, bei dem ein Gasgemisch mit einem CO-Anteil von etwa 70 Vol.% und einem $H_2$-Anteil von etwa 30 Vol.% sowie einem vernachlässigbaren Gehalt an $CO_2$ und $CH_4$ durch endotherme katalytische Oxidation von Kohlenwasserstoffen in Gegenwart von $CO_2$ als Sauerstofflieferant bei etwa Atmosphärendruck gewonnen wird.

Aufgabe der vorliegenden Erfindung ist es, aus dem bekannten $H_2$-CO-Gemisch auf einfache und kostengünstige Weise Rein-CO zu gewinnen.

Diese Aufgabe wird erfindungsgemäß dadurch gelöst, daß das erzeugte Gasgemisch verdichtet und adsorptiv von noch enthaltenem $CO_2$ und Wasser befreit und bis zur Kondensation des überwiegenden Teils des CO abgekühlt wird, daß die verbleibende gasförmige Fraktion erwärmt und abgegeben wird, daß das kondensierte CO abgetrennt und zur Ausgasung von gelöstem $H_2$ entspannt wird, daß der ausgegaste $H_2$ zum Gasgemisch zurückgeführt wird, und daß das verbleibende CO zum einen Teil verdampft und als Produkt abgegeben und zum anderen Teil nach dem Verdampfen arbeitsleistend entspannt und zum Gasgemisch zurückgeführt wird.

Mit Vorteil wird dabei die nach der Kondensation des überwiegenden Teiles des CO verbleibende gasförmige Fraktion im Wärmetausch zu abzukühlendem $H_2$-CO-Gemisch erwärmt. Der ausgegaste $H_2$ wird vorzugsweise vor der Zurückführung zum Gasgemisch weiter entspannt, mit einem Teilstrom flüssigem CO gemischt und im Wärmetausch zu abzukühlendem $H_2$-CO-Gemisch verdampft. Das als Produkt abzugebende CO wird bevorzugt zuvor im Wärmetausch zu abzukühlendem $H_2$-CO-Gemisch verdampft. Der ausgegaste $H_2$ kann vor der Zurückführung zum Gasgemisch auch arbeitsleistend entspannt werden.

Mit Vorteil werden dabei das erzeugte Gasgemisch auf einen Druck zwischen 6 und 20 bar, vorzugsweise 9 und 15 bar, verdichtet, das kondensierte CO auf einen Druck zwischen 4 und 10 bar und der ausgegaste $H_2$ auf einen Druck zwischen 1,3 und 2,5 bar entspannt.

Mit dem erfindungsgemäßen Verfahren kann ein CO-Produkt mit einer Reinheit von 98 Vol% bei über 95 % CO-Ausbeute und einem Abgabedruck bis 10 bar gewonnen werden. Ein höherer Abgabedruck ist zwar physikalisch möglich, doch unwirtschaftlich. Gleichzeitig können mit dem erfindungsgemäßen Verfahren niedrige Investitionskosten erreicht werden, da eine Vorrichtung zur Durchführung des Verfahrens vom Aufbau her sehr einfach ist. Eine derartige Vorrichtung besteht lediglich aus einem Kompressor, einer Adsorbereinheit, einem Wärmetauscher und einer Entspannungsturbine.

Der Einsatzbereich des erfindungsgemäßen Verfahrens liegt mit Vorteil bei Anlagengrößen von etwa 200 bis 1000 $Nm^3CO/h$ doch kann es auch bei größeren oder kleineren Anlagen zur Anwendung kommen.

In Weiterbildung des Erfindungsgedankens wird der zur arbeitsleistenden Turbine zu führende CO-Produktstrom vor der Verdampfung auf einen Druck zwischen 4 und 7 bar entspannt, wodurch die Kälteleistung im Wärmetauscher gesteigert wird. In dem Wärmetauscher wird das $H_2$-CO-Gemisch auf Temperaturen zwischen 70 und 80 K abgekühlt. Überdies kann nach einer weiteren Ausführungsform die verbleibende gasförmige Fraktion vor Abgabe als Regeneriergas in der Adsorbereinheit verwendet werden.

Das mit dem erfindungsgemäßen Verfahren erhaltene CO-Produkt weist je nach Abgabedruck noch einen $H_2$-Gehalt von 0,5 bis 1,5 Vol.% auf. In manchen Anwendungsfällen kann dieser relativ hohe $H_2$-Anteil störend wirken. Daher ist nach einer weiteren Verfahrensvariante vorgesehen, das erzeugte Gasgemisch auf einen Druck zwischen 6 und 20 bar, vorzugsweise 7 und 15 bar, zu verdichten und adsorptiv von noch enthaltenem $CO_2$ und Wasser zu befreien, das $H_2$-CO-Gemisch auf eine Temperatur von 85 bis 95 K abzukühlen, die verbleibende gasförmige Fraktion weiter auf 70 bis 75 K abzukühlen, die dabei entgasende Fraktion im Wärmetausch zur abzukühlenden gasförmigen Fraktion zu erwärmen und abzugeben und das dabei kondensierte CO im Wärmetausch zur abzukühlenden gasförmigen Fraktion zu verdampfen und dem Gasgemisch zuzumischen, das bei der ersten Abkühlung auskondensierte CO in drei Teilströme aufzuteilen, den Hauptstrom einer CO-Strippung zu unterziehen, einen Teilstrom als Strippgas zu verwenden und einen letzten Teilstrom auf einen Druck zwischen 4 und 7 bar zu entspannen, im Wärmetausch zu abzukühlendem $H_2$ CO-Gemisch zu verdampfen, arbeitsleistend zu entspannen und nach weiterer Anwärmung dem Gasgemisch zuzuführen.

Mit dieser speziellen Verfahrensführung bleibt in dem Rein-CO nur noch ein Bruchteil des $H_2$ gelöst: Statt 0,5 bis 1,5 Vol.% um einen Faktor von über 10 weniger.

Bei dieser Variante hat es sich als günstig erwiesen, wenn das durch Strippung gereinigte CO-Produkt im Wärmetausch zu abzukühlendem $H_2$-CO-Gemisch verdampft, angewärmt und abgegeben wird und das mit $H_2$ beladene Strippgas

entspannt, im Wärmetausch zu abzukühlendem $H_2$-CO-Gemisch erwärmt und dem Gasgemisch beigemischt wird.

Auf diese Weise kann die Kälteleistung verbessert werden. Eine Vorrichtung zur Durchführung der letztgenannten Variante ist durch einen weiteren Wärmetauscher und eine Strippsäule ergänzt.

Im folgenden sei das erfindungsgemäße Verfahren anhand eines in zwei Figuren schematisch dargestellten Ausführungsbeispieles näher erläutert. Es zeigen:

Figur 1     einfache Verfahrensführung

Figur 2     Verfahrensführung zur verbesserten Abtrennung von $H_2$.

Figur 3     Variante der Verfahrensführung nach Figur 1 und

Figur 4     Variante der Verfahrensführung nach Figur 2

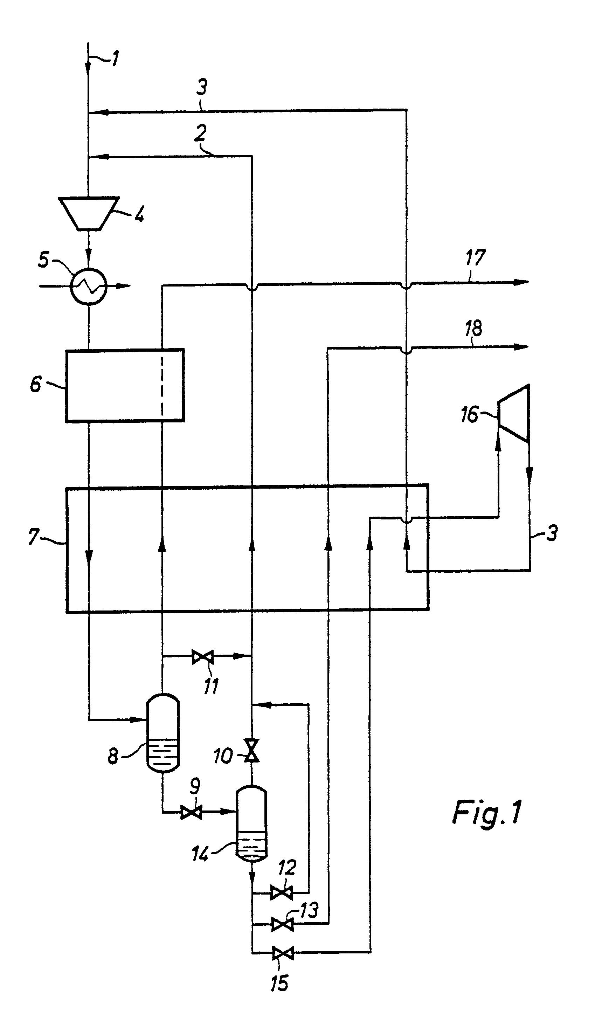

Gemäß Figur 1 wird überwiegend aus $H_2$ und CO bestehendes, bei einer vorangegangenen und nicht dargestellten endothermen katalytischen Oxidation von Kohlenwasserstoffen erzeugtes Gasgemisch über Leitung 1 herangeführt und mit Gas aus Leitung 2 und 3 aus einer nachfolgenden Tieftemperaturzerlegung, auf die noch näher eingegangen wird, gemischt und in einem Kompressor 4 auf einen Druck von 6 bis 20 bar, vorzugsweise 9 bis 15 bar, verdichtet. Das Gasgemisch wird in einem Kühler 5 gegen Kühlwasser abgekühlt und in einer Adsorbereinheit 6 von Wasser und $CO_2$ befreit. In einem Wärmetauscher 7 wird das $H_2$-CO-Gemisch auf ca. 70 bis 75 K abgekühlt, wobei der überwiegende Teil des CO auskondensiert und in einem Abscheider 8 abgetrennt wird. Die verbleibende gasförmige Fraktion, $H_2$ mit ca. 7 Vol.% CO, wird im Wärmetauscher 7 angewärmt, in der Adsorbereinheit 6 als Regeneriergas verwendet und unter Druck über Leitung 17 abgegeben.

Die Flüssigkeit aus dem Abscheider 8 wird in einem Ventil 9 auf einen Druck entspannt, der etwas höher liegt als der CO-Abgabedruck (4 bis 10 bar). Dabei gast im Abscheider 14 gelöster $H_2$ aus. Dieser wird in einem Ventil 10 auf ca. 1,3 bis 2,5 bar entspannt und mit einem Teilstrom aus der im Abscheider 8 verbleibenden gasförmigen Fraktion über Ventil 11 und einem Teilstrom über ein Ventil 12 gemischt. Ventil 12 erhält dabei seine Flüssigkeit entweder aus dem Abscheider 14 oder Abscheider 8. Die Verdampfung des Gemisches in Leitung 2 im Wärmetauscher 7 ermöglicht die tiefe Temperatur im Abscheider 8. Nach Verdampfung und Anwärmung wird das Gemisch in Leitung 2 dem Gasgemisch zugegeben.

Das aus Abscheider 14 abziehende Produkt-CO wird in einem Ventil 13 abgeregelt, im Wärmetauscher 7 verdampft und angewärmt abgegeben (Leitung 18).

Zur Erzeugung der nötigen Kälte wird von dem flüssigen CO-Produkt aus Abscheider 14 (gegebenenfalls auch aus Abscheider 8) ein Teil über ein Ventil 15 auf niederen Druck (4 bis 7 bar) entspannt, in Wärmetauscher 7 verdampft und damit angewärmt und in einer nachfolgenden Entspannungsturbine 16 arbeitsleistend entspannt. Dieser Gasstrom wird über Leitung 3 durch Wärmetauscher 7 weiter angewärmt und dem Gasgemisch in Leitung 1 vor dem Verdichter 4 zugemischt.

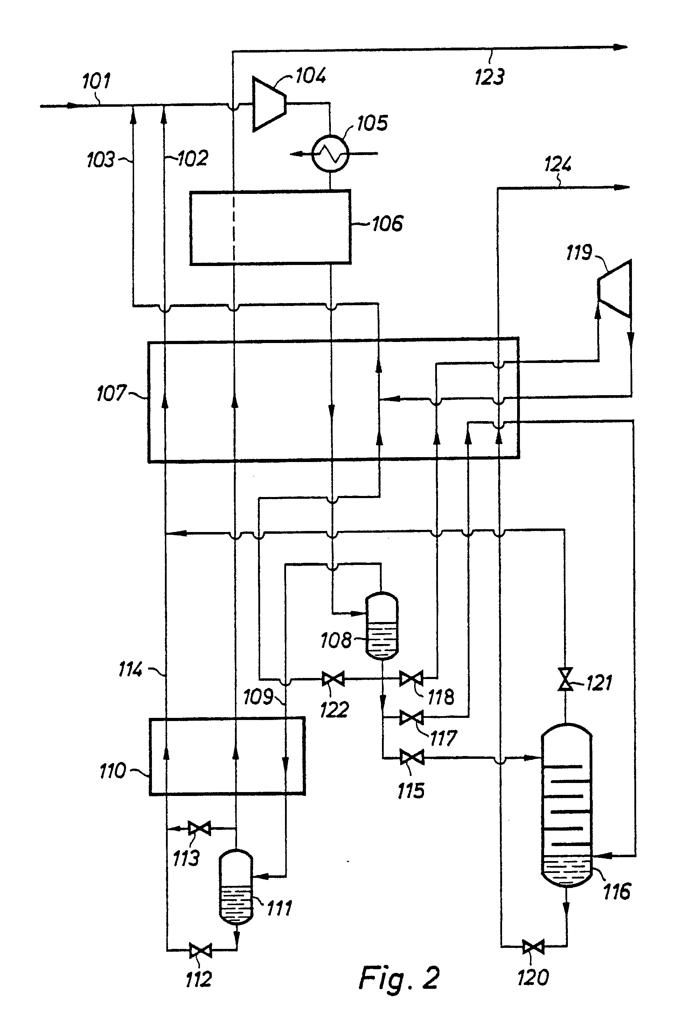

Gemäß Figur 2 wird erzeugtes Gasgemisch über Leitung 101 mit Gas aus Leitungen 102 und 103 aus einer nachfolgenden Tieftemperaturzerlegung, auf die noch näher eingegangen wird, gemischt und in einem Kompressor 104 auf einen Druck von 6 bis 20 bar, vorzugsweise 7 bis 15 bar, verdichtet. Das Gasgemisch wird in einem Kühler 105 gegen Kühlwasser abgekühlt und in einer Adsorbereinheit 106 von $H_2O$ und $CO_2$ adsorptiv befreit. In einem Wärmetauscher 107 wird das $H_2$-CO-Gemisch auf ca. 90 K abgekühlt, wobei ein Großteil des CO auskondensiert und in einem Abscheider 108 abgetrennt wird. Die verbleibende gasförmige Fraktion 109 wird in einem Wärmetauscher 110 auf ca. 70 bis 75 K weiter gekühlt, wobei wieder CO auskondensiert und in einem Abscheider 11 abgetrennt wird. Die dabei verbleibende gasförmige Fraktion wird in den Wärmetauschern 110 und 107 angewärmt, in der Adsorbereinheit 106 als Regeneriergas verwendet und über Leitung 123 unter Druck als unreines $H_2$ mit ca. 7 Vol.% CO abgegeben.

Das flüssige CO aus Abscheider 111 wird in einem Ventil 112 entspannt und über Ventil 113 mit etwas $H_2$ vermischt. Dieser Gemischstrom in Leitung 114 wird im Wärmetauscher 110 verdampft und ermöglicht somit die tiefe Temperatur im Abscheider 111. Nach weiterer Verdampfung im Wärmetauscher 107 wird der Gemischstrom über Leitung 102 dem erzeugten Gasgemisch zugeführt.

Die Flüssigkeit aus Abscheider 108 wird in drei Teilströme geteilt: Der Hauptstrom wird über Ventil 115 in eine Strippsäule 116 geführt, die etwas über dem CO-Abgabedruck steht. Ein kleiner Strom wird über Ventil 117 entspannt, im Wärmetauscher 107 verdampft und als Strippgas sumpfseitig in die Strippsäule 116 eingeführt. Der dritte Strom wird in einem Ventil 118 auf ca. 4 bis 7 bar entspannt, im Wärmetauscher 107 verdampft und angewärmt und in einer Entspannungsturbine 119 arbeitsleistend entspannt. Dieser Strom wird über die Leitung 103 nach Anwärmung in Wärmetauscher 107 dem Gasgemisch in Leitung 101 zugemischt.

In der Strippsäule 116 wird durch den verdampften Strom aus 117 Flüssigkeit aus 115 zum Siedepunkt angewärmt, so daß nunmehr ein Bruchteil des $H_2$ gelöst bleibt. Das so gereinigte CO verläßt die Säule 116 über ein Ventil 120, wird im Wärmetauscher 107 verdampft und angewärmt und als Produkt über Leitung 124 abgegeben.

Das Kopfprodukt der Strippsäule 116, ein $H_2$-CO-Gemisch, wird in einem Ventil 121 entspannt, dem Strom 114 zugemischt, im Wärmetauscher 107 angewärmt und als Strom 102 dem Gasgemisch in Leitung, 101 zugemischt.

Um die Temperatur im Abscheider 108 zu stabilisieren, ist es sinnvoll, von diesem Flüssig-CO über ein Ventil 122 zu entspannen, im Wärmetauscher 107 verdampfen und dem Turbinenauspuff zuzumischen.

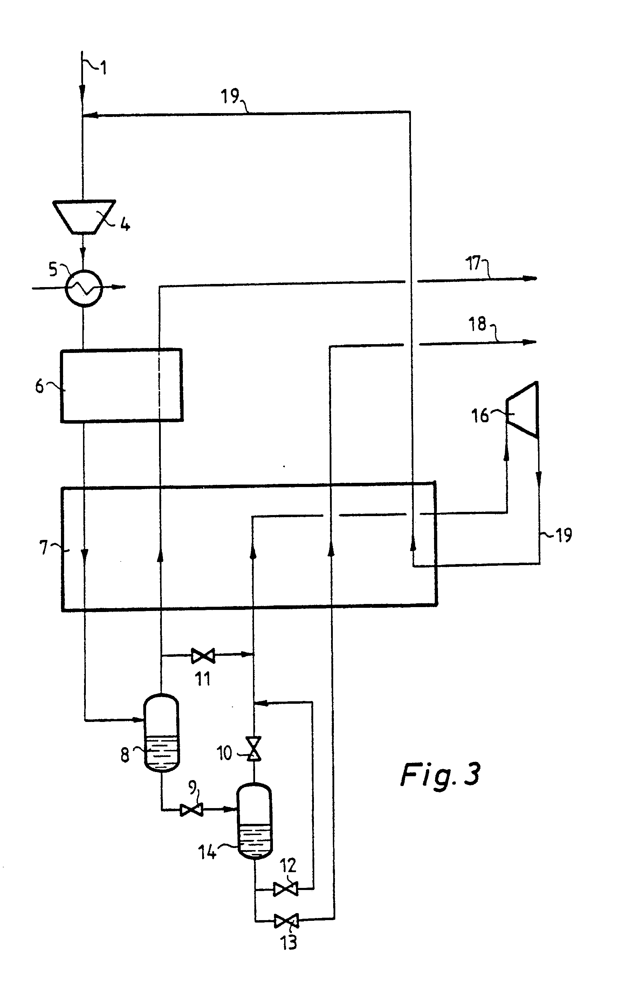

Das Ausführungsbeispiel gemäß Figur 3 unterscheidet sich von dem nach Figur 1 im wesentlichen im Zusammenfassen des Kreislauf- und Turbinenstroms. Der in den Ventilen 10, 11 und 12 erzeugte Kreislaufstrom wird bei höherem Druck (3 bis 8 bar anstatt 1,3 bis 2,5 bar) verdampft. Um ein gleich niedriges Temperaturprofil zu erhalten wie bei niedrigem Druck ist es notwenidg, mehr $H_2$-reiches Gas über Ventil 11 zuzusetzen. Dieser Strom wird nach seiner totalen Verdampfung und gegebenenfalls Überhitzung in der Turbine 16 entspannt. Der Strom in Leitung 19 ist auf diese Weise kleiner als der in den Leitungen 2 und 3 gemäß Figur 1, wodurch die Rückverdichtung entsprechend weniger Energieaufwand erfordert.

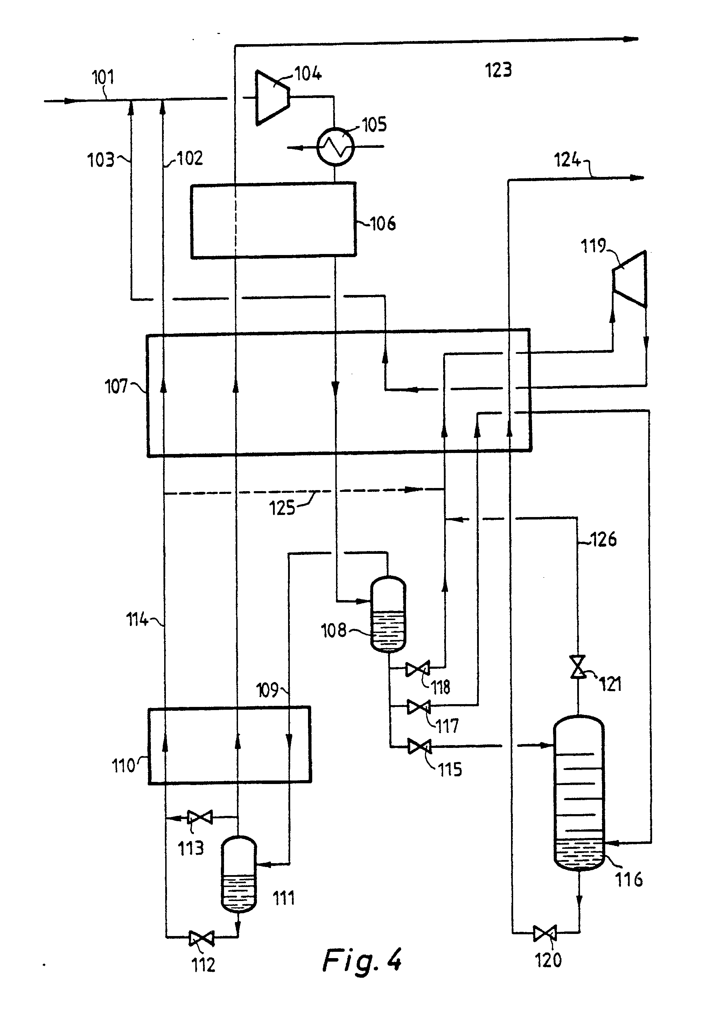

Das in Figur 4 dargestellte Ausführungsbeispiel entspricht im wesentlichen dem nach Figur 2. Das $H_2$-reiche Kopfprodukt aus der Säule 116 wird hierbei allerdings über das Ventil 121 und Leitung 126 dem Turbinenstrom aus Ventil 118 zugemischt. Damit ist auch hier der Verdampfungsdruck steigerbar und somit das Druckgefälle an der Turbine 119. Bei gleicher geforderter Kälteleistung kann der Strom aus Ventil 118 reduziert werden, wodurch auch hier Verdichtungsenergie des Stromes in Leitung 103 eingespart wird. Der Strom in Leitung 114 bzw. 102 wird belassen, da es Fälle gibt, in denen eine Zusammenfassung der Ströme in Leitung 102 und 103 nicht sinnvoll ist. Die Zusammenfassung ist jedoch über die gestrichelt dargestellte Leitung 125 angedeutet. Mit dieser ist weitere Rückverdichtungsenergie einsparbar.

**Patentansprüche**

1. verfahren zur Gewinnung von Rein-CO aus einem durch endotherme katalytische Oxidation von Kohlenwasserstoffen in Gegenwart von $CO_2$ als Sauerstoff liefernder Komponente erzeugten, überwiegend aus Wasserstoff und Kohlenmonoxid bestehenden Gasgemisch, dadurch gekennzeichnet, daß das Gasgemisch verdichtet, adsorptiv von noch enthaltenem $CO_2$ und Wasser befreit und bis zur Kondensation des überwiegenden Teils des CO abgekühlt wird, daß die verbleibende gasförmige Fraktion erwärmt und abgegeben wird, daß das kondensierte CO abgetrennt und zur Ausgasung von gelöstem $H_2$ entspannt wird, daß der ausgegaste $H_2$ zum Gasgemisch zurückgeführt wird und daß das verbleibende CO zum einen Teil verdampft und als Produkt abgegeben und zum anderen Teil nach dem Verdampfen arbeitsleistend entspannt und zum Gasgemisch zurückgeführt wird.

2. Verfahren nach Anspruch 1, dadurch gekennzeichnet, daß die nach der Kondensation des überwiegenden Teiles des CO verbleibende gasförmige Fraktion im Wärmetausch zu abzukühlendem $H_2$-CO-Gemisch erwärmt wird.

3. Verfahren nach Anspruch 1, dadurch gekennzeichnet, daß der ausgegaste $H_2$ vor der Zurückführung zum Gasgemisch weiter entspannt, mit einem Teilstrom flüssigen CO gemischt und im Wärmetausch zu abzukühlendem $H_2$-CO-Gemisch verdampft wird.

4. Verfahren nach Anspruch 1, dadurch gekennzeichnet, daß das als Produkt abzugebende CO zuvor im Wärmetausch zu abzukühlendem $H_2$-CO-Gemisch verdampft wird.

5. Verfahren nach Anspruch 1, dadurch gekennzeichnet, daß der ausgegaste $H_2$ vor der Zurückführung zum Gasgemisch arbeitsleistend entspannt wird.

6. Verfahren nach einem der Ansprüche 1 bis 5, dadurch gekennzeichnet, daß das erzeugte Gasgemisch auf einen Druck zwischen 6 und 20 bar, vorzugsweise 9 und 15 bar verdichtet, das kondensierte CO auf einen Druck zwischen 4 und 10 bar und der ausgegaste $H_2$ auf einen Druck zwischen 1,3 und 2,5 bar entspannt werden.

7. Verfahren nach einem der Ansprüche 1 bis 6, dadurch gekennzeichnet, daß der zur arbeitsleistenden Entspannung zu führende CO-Produktstrom vor der Verdampfung auf einen Druck zwischen 4 und 7 bar entspannt wird.

8. Verfahren nach einem der Ansprüche 1 bis 7, dadurch gekennzeichnet, daß das $H_2$-CO-Gemisch auf Temperaturen zwischen 70 und 80 K abgekühlt wird.

9. Verfahren nach einem der Ansprüche 1 bis 8, dadurch gekennzeichnet, daß die verbleibende gasförmige Fraktion vor Abgabe als Regeneriergas der Adsorbereinheit verwendet wird.

10. Verfahren nach Anspruch 1, dadurch gekennzeichnet, daß das erzeugte Gasgemisch auf einen Druck zwischen 6 und 20 bar, vorzugsweise 7 und 15 bar, verdichtet und adsorbtiv von noch enthaltenem $CO_2$ und $H_2O$ befreit wird, daß das $H_2$-CO-Gemisch auf eine Temperatur von 85 bis 95 K abgekühlt wird, daß die verbleibende gasförmige Fraktion weiter auf 70 bis 75 K abgkühlt wird, die dabei entgasende Fraktion im Wärmetausch zur abzukühlenden gasförmigen Fraktion erwärmt und abgegeben wird und das dabei kondensierte CO im Wärmetausch zur abzukühlenden gasförmigen Fraktion verdampft und dem Gasgemisch zugemischt wird, daß das bei der ersten Abkühlung auskondensierte CO in drei Teilströme aufgeteilt wird, daß der Hauptstrom einer CO-Strippung unterzogen wird, daß ein Teilstrom als Strippgas verwendet und ein letzter Teilstrom auf einen Druck zwischen 4 und 7 bar entspannt, im Wärmetausch zu abzukühlendem $H_2$-CO-Gemisch verdampft, arbeitsleistend entspannt und nach weiterer Anwärmung dem Gasgemisch zugeführt wird.

11. Verfahren nach Anspruch 10, dadurch gekennzeichnet, daß das durch Strippung gereinigte CO-Produkt im Wärmetausch zu abzukühlendem $H_2$-CO-Gemisch verdampft, angewärmt und abgegeben wird und daß das mit $H_2$ beladene Strippgas entspannt, in Wärmetausch zu abzukühlendem $H_2$-CO-Gemisch erwärmt und dem Gasgemisch beigemischt wird.

## Claims

1. A process for obtaining pure CO from a gas mixture which is produced by the endothermic catalytic oxidation of hydrocarbons in the presence of $CO_2$ as oxygen supplying component, and which is composed mainly of hydrogen and carbon monoxide, characterised in that the gas mixture is compressed, adsorptively freed of residual $CO_2$ and water, and cooled until the majority of the CO condenses, that the remaining gaseous fraction is heated and output, that the condensed CO is separated and expanded in order to release dissolved $H_2$ gas, that the released $H_2$ gas is returned to the gas mixture, and that one part of the remaining CO is vaporized and output as product and the other part thereof is expanded with the production of work following the vaporization and returned to the gas mixture.

2. A process as claimed in Claim 1, characterised in that the gaseous fraction which remains following the condensation of the majority of the CO is heated in heat exchange with $H_2$-CO mixture which is to be cooled.

3. A process as claimed in Claim 1, characterised in that before it is returned to the gas mixture the released $H_2$ gas is further expanded, mixed with a sub-stream of liquid CO, and vaporized in heat exchange with $H_2$-CO mixture which is to be cooled.

4. A process as claimed in Claim 1, characterised in that the CO which is to be output as product is previously vaporized in heat exchange with $H_2$-CO mixture which is to be cooled.

5. A process as claimed in Claim 1, characterised in that the released $H_2$ gas is expanded with the production of work before it is returned to the gas mixture.

6. A process as claimed in one of Claims 1 to 5, characterised in that the produced gas mixture is compressed to a pressure of between 6 and 20 bar, preferably 9 and 15 bar, the condensed CO is expanded to a pressure of between 4 and 10 bar, and the released $H_2$ gas is expanded to a pressure of between 1.3 and 2.5 bar.

7. A process as claimed in one of Claims 1 to 6, characterised in that the CO product stream which is to be fed to the work-producing expansion stage is expanded to a pressure of between 4 and 7 bar prior to the vaporization.

8. A process as claimed in one of Claims 1 to 7, characterised in that the $H_2$-CO mixture Is cooled to temperatures of between 70 and 80 K.

9. A process as claimed in one of Claims 1 to 8, characterised in that before it is output the remaining gaseous fraction is used as regenerating gas in the adsorber unit.

10. A process as claimed in Claim 1, characterised in that the produced gas mixture is compressed to a pressure of between 6 and 20 bar, preferably 7 and 15 bar, and is adsorptively freed of residual $CO_2$ and $H_2O$, that the $H_2$-CO mixture is cooled to a temperature of 85 to 95 K, that the remaining gaseous fraction is further cooled to 70 to 75 K, the gas fraction which is thereby released is heated in heat exchange with the gaseous fraction which is to be cooled and is output, and the CO which thereby condenses is vaporized in heat exchange with the gaseous fraction which is to be cooled and is added to the gas mixture, that the CO which condenses out during the first cooling is divided into three sub-streams, that the main stream is subjected to CO-stripping, that one sub-stream is used as stripping gas and a last sub-stream is expanded to a pressure of between 4 and 7 bar, vaporized in heat exchange with H₂-CO mixture which is to be cooled, expanded with the production of work, and after further heating is supplied to the gas mixture.

11. A process as claimed in Claim 10, characterised in that the CO-product which is purified by stripping is vaporized in heat exchange with H₂-CO mixture which is to be cooled, is heated and output, and that the stripping gas charged with H₂ is expanded, heated in heat exchange with the H₂-CO mixture which is to be cooled, and added to the gas mixture.

**Revendications**

1. Procédé d'obtention de CO pur à partir d'un mélange de gaz obtenu par oxydation catalytique endothermique d'hydrocarbures en présence de CO₂, agissant en tant que fournisseur d'oxygène et constitué principalement d'hydrogène et d'oxyde de carbone, caractérisé en ce que le mélange de gaz obtenu est comprimé, qu'il est débarrassé par adsorption du CO₂ et de l'eau qu'il contient encore puisqu'il est refroidi jusqu'à condensation de la majeure partie du CO, que la fraction gazeuse restante est réchauffée et évacuée, que le CO condensé est séparé et détendu pour le dégazage de H₂ dissous, que le H₂ dégazé est recyclé vers le mélange de gaz, et que le CO restant est pour une partie évaporé et recueilli en tant que produit et pour une autre partie il est détendu avec production de travail après évaporation et il est recyclé dans le mélange gazeux.

2. Procédé selon la revendication 1, caractérisé en ce que la fraction gazeuse subsistant après la condensation de la majeure partie du CO est réchauffée en échange de chaleur avec le mélange H₂-CO à refroidir.

3. Procédé selon la revendication 1, caractérisé en ce que le H₂ dégazé est encore détendu avant d'être recyclé dans le mélange de gaz, mélangé avec un courant partiel de CO liquide et évaporé en échange de chaleur avec le mélange H₂-CO à refroidir.

4. Procédé selon la revendication 1, caractérisé en ce que le CO à évacuer à titre de produit fini est tout d'abord évaporé en échange de chaleur avec le mélange H₂-CO à refroidir.

5. Procédé selon la revendication 1, caractérisé en ce que le H₂ dégazé est détendu avec production de travail avant recyclage dans le mélange de gaz.

6. Procédé selon l'une quelconque des revendications 1 à 5, caractérisé en ce que le mélange gazeux préparé est comprimé à une pression comprise entre 6 et 20 bars, de préférence 9 et 15 bars, le CO condensé est détendu à une pression comprise entre 4 et 10 bars et le H₂ dégazé est détendu à une pression comprise entre 1,3 et 2,5 bars.

7. Procédé selon l'une quelconque des revendications 1 à 6, caractérisé en ce que le courant de CO obtenu devant passer à la détente avec production de travail et détendu avant son évaporation à une pression comprise entre 4 et 7 bars.

8. Procédé selon l'une quelconque des revendications 1 à 7, caractérisé en ce que le mélange H₂-CO est refroidi à des températures comprises entre 70 et 80° K.

9. Procédé selon l'une quelconque des revendications 1 à 8, caractérisé en ce que la fraction gazeuse subsistant avant l'évacuation est utilisée comme gaz de régénération de l'unité d'adsorption.

10. Procédé selon la revendication 1, caractérisé en ce que le mélange gazeux préparé est comprimé à une pression comprise entre 6 et 20 bars, de préférence 7 et 15 bars, et qu'il est débarrassé par adsorption du CO₂ et de l'eau qu'il contient encore, que le mélange H₂-CO est refroidi à une température de 85 à 95° K, que l'on poursuit le refroidissement de la fraction gazeuse restante à une température de 70 à 75° K, la fraction alors dégazée est réchauffée en échange de chaleur avec la fraction gazeuse à refroidir et le CO qui se condense alors est évaporé en échange de chaleur avec la fraction gazeuse à refroidir et elle est ajoutée au mélange de gaz, que le CO qui s'est condensé dans le premier refroidissement est subdivisé en trois courants partiels, que le courant principal est soumis à un strippage de CO, qu'un courant partiel est utilisé comme gaz de strippage et qu'un dernier courant partiel est détendu à une pression comprise entre 4 et 7 bars, est évaporé en échange de cha-

leur avec le mélange $H_2$-CO à refroidir, est détendu avec production de travail et qu'il est rajouté au mélange gazeux après réchauffage supplémentaire.

11. Procédé selon la revendication 10, caractérisé en ce que le CO obtenu purifié par strippage est réchauffé et évaporé en échange de chaleur avec le mélange $H_2$-CO à refroidir et il est évacué et en ce que le gaz de strippage chargé de $H_2$ est détendu, réchauffé en échange de chaleur avec le mélange $H_2$-CO à refroidir et remélangé au mélange de gaz.

Fig.1

EP 0 130 284 B1

Fig. 2

*Fig.3*

*Fig. 4*